# EUROPÄISCHE PATENTSCHRIFT

(11) **EP 2 039 546 B1**
(45) Veröffentlichungstag und Bekanntmachung des Hinweises auf die Patenterteilung: **24.07.2013**
(21) Anmeldenummer: 08015895.9
(22) Anmeldetag: 10.09.2008
(51) Int. Cl.: B60J 1/00, E06B 9/42, B60J 1/20

(54) **Kassette zur Aufnahme einer Wickelwelle**
Cassette for storing a winding shaft
Cassette destinée à la réception d'un arbre d'enroulement

(30) Priorität: 20.09.2007 DE 102007046393
(43) Veröffentlichungstag der Anmeldung: 25.03.2009
(73) Patentinhaber: BOS GmbH & Co. KG, 73760 Ostfildern (DE)
(72) Erfinder: Horváth, Bálint, 9200 Mosonmagyaróvár (HU); Vajda, Gábor, 9023 Györ (HU)
(74) Vertreter: Patentanwälte Ruff, Wilhelm, Beier, Dauster & Partner

(56) Entgegenhaltungen:
- EP-A- 1 302 347
- EP-A- 1 886 855
- DE-U1- 20 218 471
- US-A- 5 036 898

## Beschreibung

Die Erfindung betrifft eine Kassette zur Aufnahme einer Wickelwelle eines flexiblen Flächengebildes mit einem Durchtrittsschlitz.

Flexible Flächengebilde dienen beispielsweise zur Verdunklung von Fahrzeugscheiben als Sonnen- und/oder Sichtschutz. Flexible Flächengebilde können weiter zur Abgrenzung eines Laderaums eines Kombifahrzeugs oder dergleichen eingesetzt werden. Um die flexiblen Flächengebilde bei Nichtgebrauch platzsparend zu verstauen, ist es bekannt, diese an einer Wickelwelle auf- und/oder abwickelbar anzubringen. Zur Befestigung der Wickelwellen in einem Kraftfahrzeug und/oder für einen besseren Schutz der Wickelwellen ist es weiter bekannt, die Wickelwellen in einer Kassette zu lagern. Derartige Kassetten weisen einen Durchtrittsschlitz auf, durch welchen das flexible Flächengebilde einer aufgenommenen Wickelwelle geführt wird.

Die Gebrauchsmusterschrift DE 202 18471 U offenbart eine solche Kassette.

Um ein sicheres Abwickeln des flexiblen Flächengebildes von der Wickelwelle bzw. ein Aufwickeln des flexiblen Flächengebildes auf die Wickelwelle zu gewährleisten, sollte eine (Öffnungs-)Breite des Durchtrittsschlitzes ein Mindestmaß nicht unterschreiten. Das Mindestmaß ist beispielsweise durch die Dicke des flexiblen Flächengebildes und ein Toleranzmaß bestimmt. Insbesondere Kassetten aus Kunststoff können sich jedoch im Gebrauch verformen, so dass die minimale Öffnungsbreite nicht immer gewährleistet werden kann. Eine Durchtrittsöffnung "fällt ein":
Es ist daher bekannt, die Kassette derartig an einem Fahrzeug anzubringen, dass im Bereich des Durchtrittsschlitzes gegenüberliegende Kassetten-Seitenteile jeweils mit einem Teil des Kraftfahrzeugs verbunden werden. So kann beispielsweise ein Kassetten-Seitenteil an einer Fahrzeugkarosserie angebracht sein, während das zweite Kassetten-Seitenteil mit der Türinnenverkleidung fest verbunden ist. Durch den festen Abstand zwischen Karosserie und Innenverkleidung wird dadurch auch gewährleistet, dass aufgrund der Fixierung der Kassetten-Seitenteile der Durchtrittsschlitz immer eine minimale Öffnungsbreite aufweist. Eine Montage einer derartigen Kassette ist jedoch aufwändig.

Es ist weiter bekannt, ein Versteifungselement an einem Kassetten-Seitenteil anzubringen, welches sich über die gesamte Kassettenlänge in Achsrichtung der Wickelwelle erstreckt, um so das entsprechende Kassetten-Seitenteil zu versteifen.

Es ist Aufgabe der vorliegenden Erfindung eine Kassette zu schaffen, bei welcher eine minimale Öffnungsbreite eines Durchtrittsschlitzes aufrechterhalten wird und welche in Leichtbauweise herstellbar ist.

Diese Aufgabe wird gelöst durch eine Kassette zur Aufnahme einer Wickelwelle eines flexiblen Flächengebildes mit einem Durchtrittsschlitz, wobei die Kassette ein Spreizmittel aufweist, durch welches der Durchtrittsschlitz offengehalten und/oder aufgespreizt wird. Das Spreizmittel ist in einer Ausgestaltung als Kraftelement gestaltet, welches in dem Durchtrittsschlitz an einem seitlichen Rand der Kassette vorgesehen ist und/oder an einer Innenwand der Kassette angebracht ist. Vorzugsweise ist das Spreizmittel an einer Außenwand der Kassette angeordnet, um so eine Lagerung der Wickelwelle und/oder ein Auf- und/oder Abwickeln des flexiblen Flächengebildes nicht zu behindern. Durch das Spreizmittel ist es möglich, eine von der Geometrie und/oder Funktion des Durchtrittsschlitzes unabhängige Befestigung für die Kassette in einem Kraftfahrzeug vorzusehen.

In einer vorteilhaften Ausgestaltung der Erfindung umfasst das Spreizmittel mindestens eine Klammer, welche die Kassette in Umfangsrichtung zumindest teilweise umgibt. Die Klammer ist in einer Ausgestaltung aus einem formstabilen Material, beispielsweise aus Metall oder einer Metalllegierung, wie Stahl, Aluminium oder dergleichen, insbesondere aus einem Stahlblech oder einem Aluminiumblech ausgebildet. Die Gestaltung der Klammer ist abhängig von der Form der Kassette, wobei die Klammer sich zumindest teilweise an die Außenkontur der Kassette anschmiegt. Die Breite der Klammer ist dabei in einer Ausführungsform geringer als die Länge der Kassette in Achsrichtung der Wickelwelle, so dass die Klammer nur partiell an der Kassette angreift.

In einer Weiterbildung der Erfindung ist vorgesehen, dass die Klammer die Kassette in Umfangsrichtung vollständig umgibt. Bei einer im Wesentlichen zylindrischen Kassettenaußenform kann die Klammer dabei nach Art einer Rohrschelle gestaltet sein.

In einer weiteren Ausgestaltung der Erfindung ist vorgesehen, dass die Klammer mindestens einen Befestigungsfortsatz zur Anbringung an einer Fahrzeugkarosserie aufweist. Die Klammer erfüllt somit eine Doppelfunktion und dient sowohl zur Aufspreizung der Durchtrittsöffnung als auch zur Befestigung der Kassette.

In einer weiteren Ausgestaltung der Erfindung ist die Klammer in Öffnungsrichtung des Durchtrittsschlitzes vorgespannt. Die Klammer ist beispielsweise aus einem Federstahl oder dergleichen gestaltet. Durch eine Vorspannung wird ein Einfallen des Durchtrittsschlitzes weiter erschwert.

In noch einer weiteren Ausgestaltung der Erfindung ist die Kassette als Halbkassette gestaltet. Als Halbkassette wird dabei eine Kassette bezeichnet, welche eine zumindest teilweise unterbrochene Außenwand aufweist. Durch die Unterbrechungen in der Außenwand ist eine Material- und/oder Gewichtseinsparung bei der Fertigung der Kassette möglich. Durch die Unterbrechungen ist jedoch auch eine Formstabilität der Kassette zumindest teilweise geschwächt. Durch das erfindungsgemäße Spreizmittel wird eine ausreichende Formstabilität auch bei derartigen Kassetten gewährleistet und so verhindert, dass aufgrund von Verformung die Öffnungsbreite des Durchtrittsschlitzes geringer als ein vorgeschriebenes Mindestmaß wird.

In einer Weiterbildung der Erfindung weist die offene Seite der Halbkassette mindestens ein Abstützelement auf. Das Abstützelement dient in einer Ausgestaltung einer Verbesserung der Formstabilität der Kassette. Alternativ und/oder zusätzlich kann das Abstützelement auch zur Befestigung der Kassette in einem Kraftfahrzeug, insbesondere an einer Fahrzeugkarosserie dienen. Das Abstützelement ist in einer Ausgestaltung derart gestaltet, dass es ebenfalls als Spreizmittel wirkt.

In einer weiteren Ausgestaltung der Erfindung weist die Kassette Befestigungsmittel zur Anbringung an einem Kraftfahrzeug, besonders an einer Fahrzeugkarosserie, insbesondere an einer Türkarosserie auf. Die Befestigungsmittel sind beispielsweise als Rastelemente, Laschen für eine Schraubverbindung, Klebeflächen und/oder dergleichen gestaltet.

In einer Weiterbildung der Erfindung ist durch das Spreizmittel eine dem Befestigungsmittel gegenüberliegende Seite der Kassette in eine Öffnungsrichtung belastet. Mit anderen Worten drückt das Spreizmittel ein Kassetten-Seitenteil, welches nicht mit dem Fahrzeug fest verbunden wird, von der Anbringungsstelle weg, um so eine Breite des Durchtrittsschlitzes auf ein vorgeschriebenes Mindestmaß zu halten.

In einer Ausgestaltung der Erfindung ist die Kassette zumindest teilweise aus Kunststoff gestaltet. Durch Verwendung von Kunststoff ist eine strapazierfähige Kassette kostengünstig herstellbar, wobei durch erfindungsgemäße Spreizmittel eine Formstabilität der Kunststoff-Kassette gewährleistet wird.

Weitere Vorteile der Erfindung ergeben sich aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

In den Zeichnungen zeigen:
- Fig. 1: eine perspektivische Darstellung eines Abschnitts einer Kassette mit einem erfindungsgemäßen Spreizmittel;
- Fig. 2: eine geschnittene Seitenansicht der Kassette gemäß Fig. 1;
- Fig.3: eine geschnittene Seitenansicht einer Kassette gemäß einer zweiten Ausführungsform ähnlich Fig. 2;
- Fig. 4: eine perspektivische Darstellung eines Abschnitts einer Kassette mit einem erfindungsgemäßen Spreizmittel gemäß einer dritten Ausführungsform;
- Fig. 5: eine perspektivische Darstellung eines Abschnitts einer Kassette mit einem erfindungsgemäßen Spreizmittel gemäß einer vierten Ausführungsform und
- Fig. 6: eine geschnittene Seitenansicht der Kassette gemäß Fig. 5.

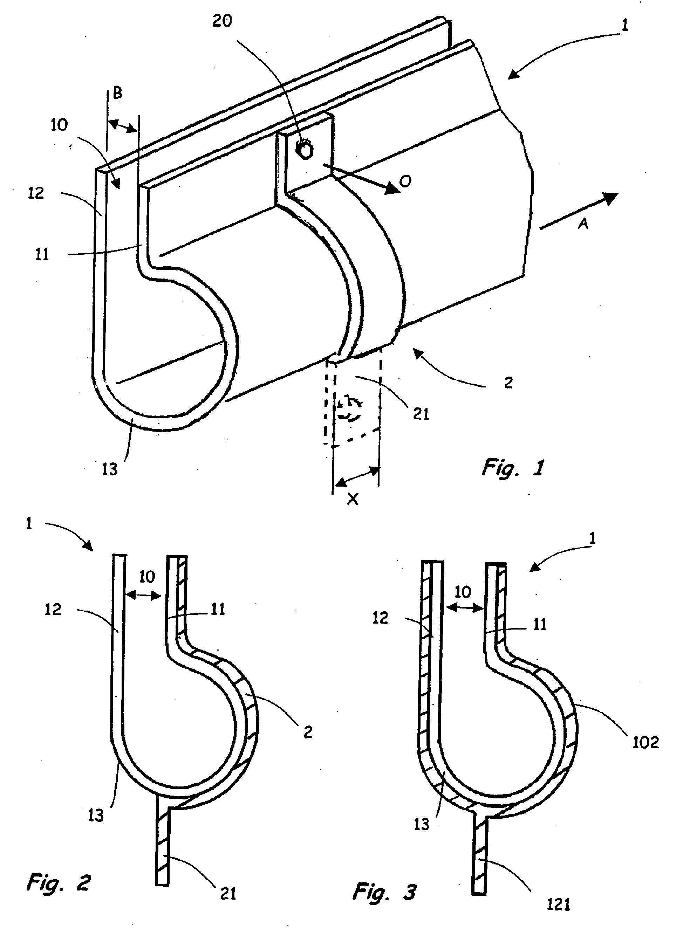

Figur 1 zeigt einen Abschnitt einer Kassette 1 in einer perspektivischen Darstellung. Die Kassette 1 dient der Aufnahme einer in Figur 1 nicht dargestellten Wickelwelle für ein ebenfalls nicht dargestelltes, flexibles Flächengebilde. Das Flächengebilde ist dabei auf der Wickelwelle auf und abwickelbar angebracht und die Kassette 1 weist einen Durchtrittsschlitz 10 zum Durchführen des Flächengebildes auf. Um eine sichere Bewegung des flexiblen Flächengebildes durch den Durchtrittsschlitz 10 ohne Verklemmen zu gewährleisten, sollte die Breite B des Durchtrittsschlitzes 10 ein in Abhängigkeit der Art des flexiblen Flächengebildes und/oder des Anbringungsorts der Kassette 1 vordefinierbares Mindestmaß nicht unterschreiten. So kann beispielsweise bei einem Flächengebilde mit einer glatten Oberfläche - wie einer Kunststofffolie -eine geringere Öffnungsbreite erforderlich sein, als bei einem als Netz gestalteten Flächengebilde, welches durch Schlaufenbildung zu einem Verhaken neigt. Auch kann in einer Umgebung, in welcher mit starken Erschütterungen der Kassette zu rechnen ist, eine größere Öffnungsbreite vorteilhaft sein.

Die Durchtrittsöffnung 10 ist in der dargestellten Ausführungsform zwischen zwei, im Bereich der Durchtrittsöffnung 10 im Wesentlichen parallelen Seitenteilen 11, 12 der Kassette 1 ausgebildet. Die Seitenteile 11, 12 sind einteilig mit einem Grundkörper 13 ausgebildet. Die durch die Seitenteile 11, 12 und den Grundkörper 13 geformte Kassette 1 ist beispielsweise aus Kunststoff hergestellt. Die Seitenteile 11, 12 sollen zur Gewährleistung der Funktionsfähigkeit der Kassette 1 mindestens einen minimalen Abstand B einhalten.

Erfindungsgemäß ist zu diesem Zweck ein Spreizmittel vorgesehen. In der dargestellten Ausführungsform ist das Spreizmittel als Klammer 2 ausgebildet, welche die Kassette 1 in Umfangsrichtung teilweise umgibt. Durch die Klammer 2 wird ein Einfallen oder Zusammendrücken des Durchtrittsschlitzes 10 verhindert. Zu diesem Zweck ist die Klammer 2 an einem der Seitenteile 11 angebracht und umgreift den Grundkörper 13 zumindest teilweise, in dem dargestellten Ausführungsbeispiel etwa zur Hälfte. Zur Anbringung ist in der dargestellten Ausführungsform ein Niet 20 vorgesehen. Alternativ oder zusätzlich zu einer Nietverbindung ist eine Verschraubung, Verklebung, Verrastung oder dergleichen denkbar. Die Klammer 2 ist in dem dargestellten Ausführungsbeispiel aus einem Stahlblech oder dergleichen ausgebildet und im Wesentlichen formstabil. Die Klammer 2 wirkt so einem Einfallen des Durchtrittsschlitzes 10 entgegen. Vorzugsweise ist die Klammer 2 in eine Öffnungsrichtung O vorgespannt, wobei ein Einfallen des Durchtrittsschlitzes 10 ohne die Klammer 2 entgegen der Vorspannung erfolgen würde.

Eine Breite X der Klammer 2 ist in dem dargestellten Ausführungsbeispiel deutlich geringer als eine Länge der Kassette in Axialrichtung A der nicht dargestellten Wickelwelle. Dabei kann an der Kassette 1 - wie dargestellt - eine Klammer 2 vorgesehen sein oder es können mehrere Klammern 2 vorgesehen sein, durch welche der Durchtrittsschlitz 10 aufgespreizt oder zumindest offengehalten wird, so dass eine Formstabilität der beispielsweise aus Kunststoff hergestellten Kassette 1 verbessert wird.

Die Klammer 2 weist in einer Ausgestaltung einen gestrichelt dargestellten Fortsatz 21 auf, durch welchen eine Befestigung mit einem Fahrzeug, insbesondere eine Befestigung an einer Fahrzeugkarosserie, beispielsweise einer Türkarosserie, möglich ist. Die Klammer 2 hat damit eine Doppelfunktion, nämlich zum einen als Spreizmittel und zum anderen auch zur Befestigung der Kassette an dem Kraftfahrzeug.

Figur 2 zeigt eine Schnittansicht der Kassette 1, wobei die Kassette 1 durch die Klammer 2 geschnitten dargestellt ist. Wie in Figur 2 deutlich erkennbar ist, umgreift die Klammer 2 den Grundkörper 13 in etwa zur Hälfte. Dadurch ist eine einfache Anbringung an dem im Wesentlichen zylindrischen Grundkörper 13 möglich. Es sind jedoch auch Klammern 2 denkbar, welche den Grundkörper 13 weniger oder gar nicht umgreifen, oder welche den Grundkörper 13 vollständig umgreifen. Die Klammer 2 ist an dem Seitenteil 11 angebracht, so dass dieses in eine Richtung weg von dem zweiten Seitenteil 12 gezwungen wird. Dadurch wird der Durchtrittsschlitz 10 aufgespreizt oder zumindest offengehalten. Das Seitenteil 12 bildet in dem dargestellten Ausführungsbeispiel eine im Wesentlichen ebene Rückwand.

Figur 3 zeigt einen Schnitt durch die Kassette 1 mit einer Klammer 102 gemäß eine zweiten Ausführungsbeispiel der Erfindung. Die Ausführungsform ist ähnlich den Figuren 1 und 2 und für gleiche Bauteile werden einheitliche Bezugszeichen verwendet. Auf eine ausführliche Beschreibung bereits beschriebener Bauteile wird verzichtet. Im Unterschied zu der Ausführungsform gemäß den Figuren 1 und 2 umgibt die Klammer 102 die Kassette 1 in Umfangsrichtung bis auf den Bereich des Durchtrittschlitzes 10 vollständig, um so die Kassette 1 zumindest partiell zu versteifen und den Durchtrittsschlitz 10 aufzuspreizen. Die Klammer 102 weist in der dargestellten Ausführungsform ebenfalls einen Fortsatz 121 zur Befestigung an einem Kraftfahrzeug auf, wobei der Fortsatz 121 jedoch nicht an einem Ende der Klammer 102 angeordnet ist.

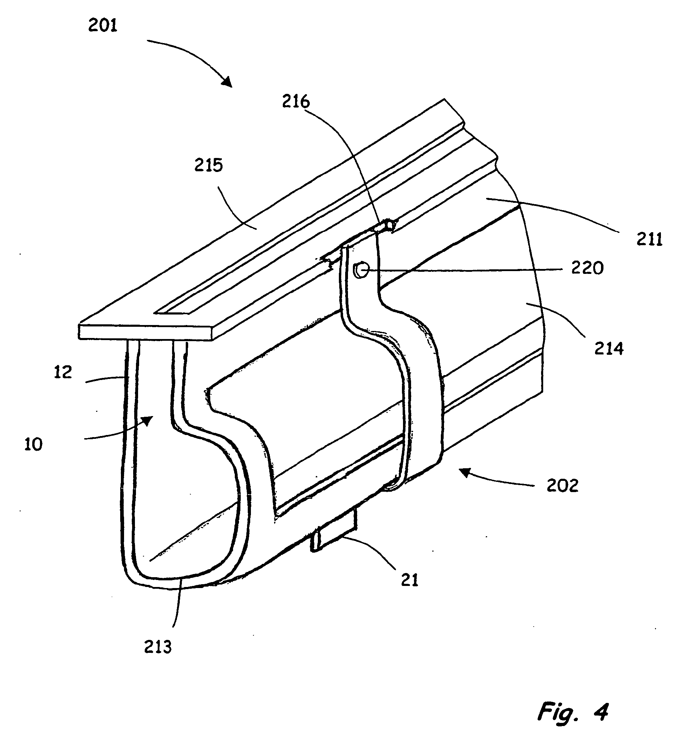

Figur 4 zeigt eine Kassette 201 mit einem als Klammer 202 ausgebildeten Spreizmittel gemäß einem dritten Ausführungsbeispiel der Erfindung in einer perspektivischen Darstellung. Die Kassette 201 entspricht im Wesentlichen der Kassette 1 gemäß Figur 1, wobei jedoch im Unterschied zu der Ausführungsform gemäß Figur 1 die Kassette 201 als Halbkassette ausgebildet ist. Für gleiche Bauteile werden einheitliche Bezugszeichen verwendet und auf eine ausführliche Beschreibung bereits beschriebener Bauteile wird verzichtet. Bei der Halbkassette 201 weisen eine Seitenwandung 211 und der Grundkörper 213 eine gemeinsame Ausnehmung 214 auf, so dass Material und/oder Gewicht eingespart werden kann. Zur Verbesserung der Formstabilität der Kassette 201, insbesondere um ein Einfallen des Durchtrittsschlitzes 10 zu verhindern, ist erfindungsgemäß die Klammer 202 vorgesehen, durch welche der Durchtrittsschlitz 10 offengehalten und/oder aufgespreizt wird. In dem dargestellten Ausführungsbeispiel ist die Klammer 202 mit der Kassette 201 an einer Nietstelle 220 vernietet. In anderen Ausgestaltungen kann eine Verklebung, Verschraubung und/oder eine andere lösbare oder unlösbare Befestigung vorgesehen sein. Die Kassette 201 weist eine Abdeckung 215 auf, welche die Kassette 201 im Bereich des Durchtrittsschlitzes 10 nach oben abdeckt und auch als Blende für die Kassette 201 dienen kann. Die Abdeckung 215 weist in der dargestellten Ausführungsform eine Ausnehmung 216 für die Klammer 202 auf.

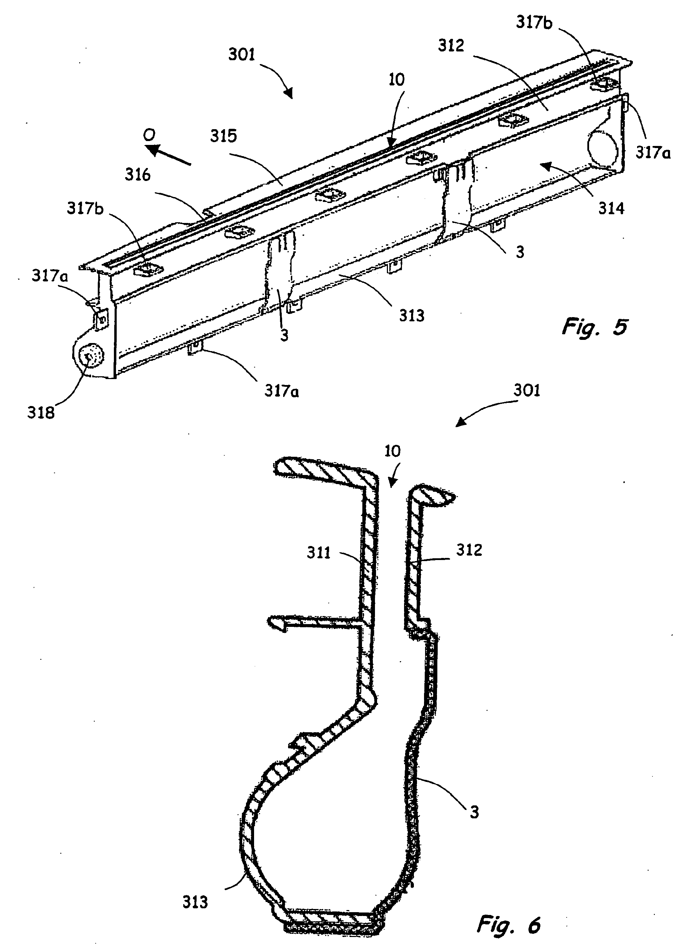

Die Figuren 5 und 6 zeigen eine Kassette 301 gemäß einem vierten Ausführungsbeispiel der Erfindung in einer perspektivischen Darstellung bzw. in einer Schnittansicht. Die Kassette 301 ist als Halbkassette ausgebildet, wobei die Kassette 301 eine Ausnehmung 314 aufweist, welche sich im Wesentlichen über eine gesamte Rückwand 312 der Kassette 301 erstreckt. Die Rückwand 312 wird dabei als Rückwand bezeichnet, da sie vorzugsweise beim Anbringen der Kassette 301 an einer Fahrzeugtür in Richtung der Fahrzeugkarosserie weist. Zur Verbesserung der Formstabilität der Halbkassette 301 ist ein oder sind mehrere Abstützelemente 3 vorgesehen, in dem dargestellten Ausführungsbeispiel zwei Abstützelemente 3, welche mit einem Grundkörper 313 und der Rückwand 312 der Kassette 301 verschraubt, vernietet, verrastet, verklebt und/oder auf andere Art und Weise verbunden sind. Die Abstützelemente 3 sind in einer Ausgestaltung derart angebracht, dass sie die Rückwand 312 und eine Vorderwand 311 im Bereich des Durchtrittsschlitzes 10 auseinander zwingen, d.h. den Durchtrittsschlitz 10 aufspreizen oder zumindest offen halten.

Die Kassette 301 weist Befestigungsmittel 317a, 317b auf, durch welche die Kassette 301 an einer nicht dargestellten Fahrzeugkarosserie anbringbar ist. In den dargestellten Ausführungsformen sind dabei sowohl Laschen 317a für eine Verschraubung mit der Fahrzeugkarosserie, als auch Rastnasen 317b für eine Verrastung mit der Fahrzeugkarosserie vorgesehen.

In der Darstellung gemäß Figur 5 ist weiter ein Lager 318 für eine nicht dargestellte Wickelwelle sichtbar. Die Kassette 301 weist ein Abdeckelement 315 ähnlich dem Abdeckelement 215 der Kassette 201 gemäß Figur 4 auf, unterscheidet sich von diesem jedoch leicht in der Form. Das Abdeckelement 315 ist mit einer Ausnehmung 316 ausgebildet, wobei im Bereich der Ausnehmung 316 eine in Figur 4 und 5 nicht sichtbare Klammer, beispielsweise eine Klammer gemäß den Figuren 1 bis 4, zur Verbesserung der Formstabilität der Kassette 301 anbringbar ist. Durch die nicht sichtbare Klammer wird die Kassette 301 so aufgespreizt, dass eine Seitenwand 311 in eine Öffnungsrichtung O, weg von den Befestigungsmittel 317a, 317b gezwungen.

## Patentansprüche

1. Kassette zur Aufnahme einer Wickelwelle eines flexiblen Flächengebildes mit einem Durchtrittsschlitz (10), **dadurch gekennzeichnet, dass** die Kassette (1, 201, 301) ein Spreizmittel (2, 102, 202, 3) aufweist, durch welches der Durchtrittsschlitz (10) offenhaltbar und/oder aufspreizbar ist, dass das Spreizmittel mindestens eine Klammer (2, 102, 202) umfasst, welche die Kassette (1, 201, 301) in Umfangsrichtung zumindest teilweise umgibt, und dass die Klammer (2, 102, 202) in Öffnungsrichtung (O) des Durchtrittsschlitzes (10) vorgespannt ist.

2. Kassette nach Anspruch 1, **dadurch gekennzeichnet, dass** die Klammer (102) die Kassette (1) in Umfangsrichtung im Wesentlichen vollständig umgibt.

3. Kassette nach Anspruch 1 oder 2, **dadurch gekennzeichnet, dass** die Klammer (2, 102) mindestens einen Befestigungsfortsatz (21) zur Anbringung an einer Fahrzeugkarosserie aufweist.

4. Kassette nach einem der Ansprüche 1 bis 3, **dadurch gekennzeichnet, dass** die Kassette als Halbkassette (201, 301) gestaltet ist.

5. Kassette nach Anspruch 4, **dadurch gekennzeichnet, dass** eine zumindest teilweise offene Wand, insbesondere eine Rückwand (312) der Halbkassette (301) mindestens ein Abstützelement (3) aufweist.

6. Kassette nach einem der Ansprüche 1 bis 5, **dadurch gekennzeichnet, dass** die Kassette (301) Befestigungsmittel (317a, 317b) zur Anbringung an einer Fahrzeugkarosserie, insbesondere an einer Türkarosserie aufweist.

7. Kassette nach Anspruch 6, **dadurch gekennzeichnet, dass** durch das Spreizmittel eine dem Befestigungsmittel (317a, 317b) gegenüberliegende Wand der Kassette (301) in eine Öffnungsrichtung (O) belastet ist.

8. Kassette nach einem der Ansprüche 1 bis 7, **dadurch gekennzeichnet, dass** die Kassette (1, 201, 301) zumindest teilweise aus Kunststoff gestaltet ist.

## Claims

1. Cassette for storing a winding shaft of a flexible planar structure having a passage slot (10), **characterized in that** the cassette (1, 201, 301) has a spreading means (2, 102, 202, 3) by which the passage slot (10) can be held open and/or spread open, **in that** the spreading means comprises at least one clamp (2, 102, 202) surrounding the cassette (1, 201, 301) at least partially in the circumferential direction, and **in that** the clamp (2, 102, 202) is prestressed in the opening direction (O) of the passage slot (10).

2. Cassette according to Claim 1, **characterized in that** the clamp (102) surrounds the cassette (1) substantially completely in the circumferential direction.

3. Cassette according to Claim 1 or 2, **characterized in that** the clamp (2, 102) has at least one fastening extension (21) for attachment to a vehicle body.

4. Cassette according to one of Claims 1 to 3, **characterized in that** the cassette is designed as a half-cassette (201, 301).

5. Cassette according to Claim 4, **characterized in that** an at least partially open wall, in particular a rear wall (312) of the half-cassette (301), has at least one bracing element (3).

6. Cassette according to one of Claims 1 to 5, **characterized in that** the cassette (301) has fastening means (317a, 317b) for attachment to a vehicle body, in particular to a door body.

7. Cassette according to Claim 6, **characterized in that** a wall of the cassette (301) opposite the fastening means (317a, 317b) is stressed in an opening direction (O) by the spreading means.

8. Cassette according to one of Claims 1 to 7, **characterized in that** the cassette (1, 201, 301) is made at least partially of plastic.

## Revendications

1. Cassette destinée à la réception d'un arbre d'enroulement d'une structure plane souple et munie d'une fente de passage (10), **caractérisée en ce que** la cassette (1, 201, 301) présente un moyen d'écartement (2, 102, 202, 3) par lequel la fente de passage (10) peut être maintenue ouverte et/ou écartée, que le moyen d'écartement comprend au moins une bride (2, 102, 202) qui entoure la cassette (1, 201, 301) dans le sens circonférentiel au moins partiellement, et que la bride (2, 102, 202) est soumise à une tension initiale dans le sens d'ouverture (O) de la fente de passage (10).

2. Cassette selon la revendication 1, **caractérisée en ce que** la bride (102) entoure quasiment intégralement la cassette (1) dans le sens circonférentiel.

3. Cassette selon la revendication 1 ou 2, **caractérisée en ce que** la bride (2, 102) présente au moins une patte d'attache (21) pour fixation à une carrosserie de véhicule.

4. Cassette selon l'une des revendications 1 à 3, **caractérisée en ce que** la cassette est conçue en tant que demi-cassette (201, 301).

5. Cassette selon la revendication 4, **caractérisée en ce qu'**une paroi au moins partiellement ouverte, en particulier une paroi arrière (312) de la demi-cassette (301) présente au moins un élément d'étaiement (3).

6. Cassette selon l'une des revendications 1 à 5, **caractérisée en ce que** la cassette (301) présente des moyens d'attache (317a, 317b) pour fixation à une carrosserie de véhicule, en particulier à une carrosserie de porte.

7. Cassette selon la revendication 6, **caractérisée en ce qu'**une paroi de la cassette (301) opposée aux moyens d'attache (317a, 317b) est soumise à une force par le moyen d'écartement dans un sens d'ouverture (O).

8. Cassette selon l'une des revendications 1 à 7, **caractérisée en ce que** la cassette (1, 201, 301) est au moins partiellement conçue en matière plastique.
